# EUROPEAN PATENT APPLICATION

(11) **EP 2 557 753 A1**
(43) Date of publication of application: **13.02.2013**
(21) Application number: 11306025.5
(22) Date of filing: 09.08.2011
(51) Int. Cl.: H04L 29/06

(54) **Method for streaming video content, edge node and client entity realizing such a method**

(71) Applicant: Alcatel Lucent, 75007 Paris (FR)
(72) Inventor: De Vleeschauer, Danny, 9940 Evergem (BE); Robinson, Dave, Aldbourne, Wiltshire SN8 2NP (GB)
(74) Representative: ALU Antw Patent Attorneys

(57) **Abstract**

Method for streaming video content from a video server entity to a client entity via a core network and an aggregation network connected through an edge node. The server entity can be either the origin server or a serving node in a CDN that acts as a surrogate server. The video content is offered by the video server entity as a set of consecutive fragments (or chunks or segments), each fragment of this set of consecutive fragments being offered in a plurality of quality levels corresponding to respective encoded bit rates. The method comprises the steps of:
- transmitting via the network from said client entity to said video server entity via said edge node one or more requests for fragments with a target quality level of said video content to be displayed at said client entity; and
- receiving at said client entity via said network one or more replies to the requests containing fragments with said target quality levels,

The method further comprises the steps of said edge node evaluating the available throughput for said client entity to transmit said fragments to said client entity over said aggregation network and said edge node informing said client entity about said available throughput.

## Description

### Field of the Invention

The present invention relates to the field of networked video streaming services, in particular video streaming services offered over the Hypertext Transfer Protocol (HTTP) such as HTTP adaptive streaming (HAS).

### Background

Video streaming applications are offered more and more over the open Internet. Traditional methods use UDP (User Datagram Protocol)/RTP (Real-time Transport Protocol) based protocols, often assisted by a retransmission or FEC (Forward Error Correction) scheme to alleviate packet loss. These methods have the problem that they cannot easily rely on HTTP infrastructure widely deployed over the Internet and that the associated flows often are blocked by firewalls. Therefore, video transported over HTTP has gained attention. One method, i.e., progressive download, transports the video file as fast as possible (which may involve a lot of buffering at the receiver side), and starts the play-out as soon (even if the file is only partially received) as the client estimates that no buffer dry-out will occur during normal play-out of the complete video file. The start of play-out often has to be chosen conservatively as it is hard to predict how the throughput offered by the network (i.e., have fast the video bits will come in) will evolve after the play-out has started.

Another alternative, i.e., HTTP adaptive streaming, makes more frequent decisions than progressive download (which basically only chooses the start of play-out). The video is segmented in chunks and each chunk is encoded in different quality versions (each requiring a different bit rate). The idea is that the chunks are downloaded in a version that the network throughput allows. This HTTP adaptive streaming protocol takes advantage to the maximal extent of the bandwidth available between a video server and a client at any given time, by dynamically switching between different levels of video quality for the streamed content.

Accordingly, at a time when the available bandwidth is high, for instance due to a decreased level of overall network traffic, it is advantageous to stream video encoded at a relatively high quality, representing graphics with high resolution and/or a high frame rate encoded at a relatively high bit rate. Similarly, at a time when the available bandwidth is low, for instance due to an increased level of overall network traffic, it is advantageous to stream video encoded at a relatively low bit rate, representing graphics with a low resolution and/or a low frame rate.

HTTP Adaptive streaming (HAS) is an emerging technique for the delivery of video. It is supported by industry leaders such as Microsoft (Smooth-streaming) and Apple (Live-streaming). It has the advantage that it is easily deployable, because it traverses firewalls more easily than other protocols, because it has inherent congestion control as it relies on TCP (Transport Control Protocol) and because it can make use of the available HTTP infrastructure, in particular, of HTTP caches and CDN (Content Distribution Network) nodes.

Practical implementations of this basic technique operate as follows: the video is segmented in chunks or fragments or segments and each of them is encoded in a number of different bit rates representing a different video quality. By monitoring how fast previous segments are downloaded the client can make an evaluation of the available network throughput and the evolution thereof up to a certain moment and requests the next chunk in a bit rate equal (or slightly less than) this throughput estimate.

In these implementations the clients are solely responsible for evaluating the available network throughput. However they not always have the best information to do so, and therefore the streaming is not always performed in an optimal way.

### Summary of the Invention

According to an aspect of the present invention, there is provided a method for streaming video content from a video server entity to a client entity via a core network and an aggregation network connected through an edge node. The server entity can be either the origin server or a serving node in a CDN that acts as a surrogate server. The video content is offered by the video server entity as a set of consecutive fragments (or chunks or segments), each fragment of this set of consecutive fragments being offered in a plurality of quality levels corresponding to respective encoded bit rates. The method comprises the steps of:
- transmitting via the network from said client entity to said video server entity via said edge node one or more requests for fragments with a target quality level of said video content to be displayed at said client entity; and
- receiving at said client entity via said network one or more replies to the requests containing fragments with said target quality levels,

The method further comprises the steps of said edge node evaluating the available throughput for said client entity to transmit said fragments to said client entity over said aggregation network and said edge node informing said client entity about said available throughput.

The edge node is the bottleneck node (i.e. the node where congestion occurs). This node normally has more knowledge about the available throughput to transmit the segments over the aggregation network than the clients do: for example from control messages exchanged at the physical layer, from querying configuration profiles, by inspecting intervals between packets, etc., the edge node can infer the total available network throughput and by deep packet inspection or via communicating with the video server entity, it can keep track of how many video flows it serves at any moment in time. These two pieces of information, i.e., said total available throughput and said number of active clients, allow the edge node to calculate a throughput for each client. Either the total throughput can be shared equally between clients or some clients may get proportionally more throughput according to some predetermined weights. By sending this available throughput information to the client, the latter can use this information to make better decisions on the target quality level of the chunks to be requested from the video server, overruling or adjusting the client's own estimate of the throughput.

According to an embodiment the edge node checks if said client entity does not request fragments with a target quality level that is such that said available throughput (communicated from edge node to client) is exceeded. In case this happens said edge node aims at reducing the transmission capacity available for said client entity in said aggregation network to transmit said fragments. It can do so by either dropping selected packets (such that TCP in the client will react by decreasing its throughput) or by reducing the transmission priority of the segments over the network.

The invention also relates to an edge node and a client entity realizing the above described method.

### Brief Description of the Figures

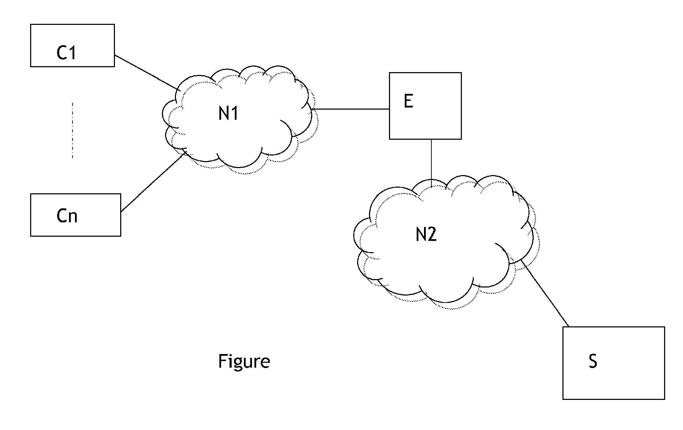

Some embodiments of apparatus and/or methods in accordance with embodiments of the present invention are now described, by way of example only, and with reference to the accompanying drawing which represents a generic system realizing the subject invention.

### Description of Embodiments

The system shown in the figure consists of a number of client entities C1 to Cn connected to a video server S (or the serving node in the CDN that acts as a surrogate server) over an access (or aggregation) network N1 and a core network N2. N1 and N2 are connected via an edge node E.

In a first embodiment N1 is an ADSL network and E is a digital subscriber line access multiplexer (DSLAM). Communication between client entities C1-Cn and server entity S is realized via E over the Internet N2 using HTTP over TCP/IP. The clients C1 - Cn download video streams from S via E by requesting video segments with a target quality based on an evaluated available transmission bit rate. How the user entities evaluate this available transmission bit rate is herein not described in detail since it is obvious for a person skilled in the art how to do this, and since it is not part of the invention. The edge node E is a plain packet forwarder with additional capabilities: Edge node E stores a configuration file (not shown) with information on the total available network throughput or the throughput reserved for the video traffic in this ADSL network. In an alternative implementation edge node E communicates with a network configuration engine to obtain this information. In addition edge node E monitors the number of active video clients sharing this total available network throughput, f.i. by deep packet inspection. Based on the thus obtained knowledge edge node E signals the share of this available network throughput to each client entity C1-Cn. This is, for instance, the total throughput divided by the number of client entities. Alternatively the available total network throughput can be divided amongst the clients proportional to a predetermined weight. The client entities C1-Cn take into account this information to make a better evaluation of the video quality that is selected for the next chunk to be downloaded.

In alternative embodiments the edge node E monitors the throughput reserved for the video class as well as the profile of the clients by communicating with an application server (not shown). Based on this total throughput and the profile of the clients, the individual throughput is calculated (as a fraction proportional to the profile) and communicated to the clients, which as before should take this information into account when deciding on the bit rate of the chunk to download next.

In another alternative embodiment the manifest file (which is a description of all video bit rates that are available for each segment and which is downloaded at the start of the video flow) is snooped and a list of available bit rate is constructed. This information can be used to further fine-tune the throughput value that the edge node communicates to the clients.

In principle clients C1-Cn can opt to (in fact, should) take this information sent from said edge node E into account in their decision on which video segments to download: one conservative method would be to choose the next segment in a video bit rate that is the minimum of the hinted network bit rate and their own measurement of the available network throughput. However, traditional (or malicious) clients may ignore the information sent by the edge node (malicious clients may do so in the hope to reach a higher quality that the other clients).

In order to avoid this behavior, edge node E also monitors the HTTP requests from the client to the server entity and/or the ACKs and sequence numbers in the TCP packets that the clients send back to the server entity. Based on this information the edge node E infers the requested bit rate for the next chunk, in the former case by inspecting and interpreting the URL in the "HTTP Get" requests and in the latter by inspecting how many bytes (which can be inferred from the sequence numbers) were transmitted over a specified interval. With this information the edge node E can determine which clients are traditional or malicious and it can consequently penalize clients that request video segments with a quality that results in exceeding the communicated available throughput. It can, for instance, do so by dropping some packets such that its TCP connection(s) only see a lower throughput.

In an alternative embodiment edge node E uses a DiffServ scheduler. DiffServ allows to define several traffic classes (e.g., "best effort", "expedited forwarding", "assured forwarding", ...) that can each receive a specific treatment in all nodes and, in particular, in edge node E. Using this technology minimal delay or packet loss for certain traffic classes can be ensured. Concretely, in edge node E the video traffic (or more generally, the traffic with a certain Diffserv code point set to a specific value) is normally given priority treatment over other traffic (i.e., data traffic from other applications). More specifically, compliant video traffic is transported over the DiffServ code point which receives priority treatment, but the edge node E moves the traffic from non-complying clients to a DiffServ Code Point with lower priority (e.g., from "Assured Forwarding" to "Best Effort") to penalize clients not taking into account the throughput information provided by edge node E.

Still another embodiment pertains to a wireless environment. In this scenario the bottleneck is typically the air interface. This air interface has knowledge about the signal strength associated with each client and hence can infer how much power is required to achieve a certain throughput for each client. It is also governed by a scheduler that decides how much bit rate a bearer (serving a user) receives. Based on its own policy the bottleneck node calculates a target share of the total throughput for each client (which is different from the fair share that TCP would give). It communicates this throughput to the client that may opt to use this hint in its decisions which chunks to request or not. Similarly as in the above described wire-line case the network (more specifically the packet gateway) has the option to intercept either request packets (e.g., "HTTP Get" messages) or ACKs to infer the video bit rate that the clients actually ask. Based on its decision whether or not the client follows the hints or not, the edge node can alter its bearer type or drop a few packets of the non-complying flow such that a client actually sees a lower throughput and is forced to comply (otherwise its buffer risks to deplete and the video risks to stall).

It has to be noted that the above embodiments are described by way of their functionality rather than by a detailed implementation, because it should be obvious for a person skilled in the art to realize the implementation of the elements of the embodiments based on this functional description.

It has also to be noted that the above described functions may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included. The functionality of S or part of it can for instance be incorporated in E.

The above description and drawing merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions. Moreover, all statements herein reciting principles, aspects, and embodiments of the invention, as well as specific example thereof, are intended to encompass equivalents thereof.

## Claims

1. A method for streaming video content from a video server entity (S) to a client entity (C1;Cn) via a core network (N2) and an aggregation network (N1) connected through an edge node (E), said video content being offered by said video server entity (S) as a set of consecutive fragments, each fragment of said set of consecutive fragments being offered in a plurality of quality levels corresponding to respective encoded data rates, said method comprising the steps of:
- transmitting via said core network (N2) and said aggregation network (N1) through said edge node (E) from said client entity (C1;Cn) to said video server entity (S) one or more requests for fragments with a target quality level of said video content to be displayed at said client entity (C1;Cn) and
- receiving at said client entity (C1;Cn) via said core network (N2) and said aggregation network (N1) one or more replies to the requests containing fragments with said target quality levels,
**characterized in that** said method further comprises the steps of said edge node (E) evaluating an available throughput for said client entity (C1;Cn) to transmit said fragments to said client entity (C1;Cn) over said aggregation network (N1) and said edge node (E) informing said client entity (C1;Cn) about said available throughput.

2. Method according to claim 1, **characterized in that** it includes the step of said client entity (C1;Cn) taking into account said available throughput to determine said target quality level.

3. Method according to claim 1, **characterized in that** said edge node (E) checks if said client entity (C1;Cn) does not request fragments with a target quality level that is such that said available throughput is exceeded and that in case this happens said edge node (E) reduces a transmission capacity available for said client entity (C1;Cn) in said aggregation network (N1) to transmit said fragments.

4. Method according to claim 3, **characterized in that** said edge node (E) reduces said transmission capacity by dropping selected video packets

5. Method according to claim 3, **characterized in that** said edge node (E) reduces said transmission capacity by reducing a transmission priority for said cliententity (C1;Cn).

6. Edge node (E) for realizing a method according to claim 1 said edge node comprising an available throughput evaluation module adapted to evaluate an available throughput in said aggregation network (N2) for transmitting said fragments to said client entity (C1;Cn) and a transmission module adapted to transmit to said client entity (C1;Cn) information about said available throughput.

7. Edge node (E) according to claim 6, **characterized in that** said edge node (E) also includes a checking module adapted to check if said user entity (C1;Cn) does not request fragments with a target quality level that is such that said available throughput is exceeded and in the positive to trigger said transmission module to drop selected video packets.

8. Edge node (E) according to claim 6, **characterized in that** said edge node (E) also includes a checking module adapted to check if said user entity (C1;Cn) does not request fragments with a target quality level that is such that said available throughput is consistently exceeded and in the positive to trigger said transmission module to send to said video server entity (S) a request to transmit the packets destined to said client entity (C1;Cn) with a lower priority.

9. Client entity (C1;Cn) for realizing a method according to claim 1 said client entity (C1;Cn) being adapted to receive from said edge node (E) information about an available throughput in said aggregation network (N1) to transmit said fragments to said client entity (C1;Cn) and to determine said target quality in function of said available throughput.
